# EUROPÄISCHE PATENTSCHRIFT

(11) **EP 0 701 911 B1**
(45) Veröffentlichungstag und Bekanntmachung des Hinweises auf die Patenterteilung: **10.12.1997**
(21) Anmeldenummer: 95114477.3
(22) Anmeldetag: 14.09.1995
(51) Int. Cl.: B60B 3/04, B60C 29/02

(54) **Fahrzeugrad für Nutzfahrzeuge**
Wheel for commercial vehicles
Roue de camion

(30) Priorität: 15.09.1994 DE 4432857
(43) Veröffentlichungstag der Anmeldung: 20.03.1996
(73) Patentinhaber: SÜDRAD Autoräder GmbH & Co Kommanditgesellschaft, D-73061 Ebersbach (DE)
(72) Erfinder: Weber, Gottfried, D-73061 Ebersbach (DE); Dehm, Siegbert, D-73035 Göppingen (DE); Schumann, Gisela, D-73119 Zell u.A. (DE)
(74) Vertreter: Haug, Dietmar, Dipl.-Ing.

(56) Entgegenhaltungen:
- EP-A- 0 067 247
- DE-U-29 506 449
- FR-A- 2 314 838
- FR-A- 2 578 945
- GB-A- 1 066 778

## Beschreibung

Die Erfindung betrifft ein Fahrzeugrad für Nutzfahrzeuge, mit einer Steilschulterfelge für schlauchlose Reifen und einer an der Steilschulterfelge angebrachten Radschüssel, wobei die Steilschulterfelge ein Felgentiefbett, eine äußere Felgenschulter, ein zylindrisches Übergangsteil, das zwischen dem Felgenbett und der äußeren Felgenschulter angeordnet und im Durchmesser größer als das Felgenbett ist, und ein Ventilloch aufweist, das zwischen dem Felgenbett und der äußeren Felgenschulter angeordnet ist, wobei die Radschüssel eine den Rand der Radschüssel bildende Seitenwand hat, die eine Öffnung aufweist und an einen zwischen sich und der Felgenschulter gebildeten Raum grenzt, und wobei ein Ventil vorgesehen ist, das ein Ventilrohr und ein an einem Ende des Ventilrohres vorgesehenes Anschlußteil aufweist, das am Ventilloch der Felge befestigbar ist.

Bei derartigen, bekannten Fahrzeugrädern für Nutzfahrzeuge ist das Luftventil so an der Felge angebracht, daß es in den inneren Raum des Radkörpers hineinragt und durch eine entsprechende Öffnung in der Radschüssel mit einem externen Druckluftschlauch verbunden werden kann.

Durch die Einführung der Scheibenbremstechnik auch bei Nutzfahrzeugen ist der Bremssattel als nichtrotierendes Teil im inneren Raum des Radkörpers vorhanden. Daher ist es speziell bei Baustellenfahrzeugen vorgekommen, daß sich zwischen Luftventil und Bremssattel ein Fremdkörper (Steine usw.) eingeklemmt hat, der beim Weiterfahren schlagartig das Ventil abreißt. Dieser plötzliche Luftverlust im Reifen kann gefährliche Situationen heraufbeschwören.

Zur möglichen Lösung wurde das Ventil mit einem metallenen und an der Felge angeschweißten Schutzbügel versehen. Dies hatte aber zur Folge, daß zwar das Ventil geschützt war, jedoch daß der Bremssattel beim Einklemmen von Fremdkörpern durch den Ventilschutz zerstört wurde mit der Folge, daß die Bremse versagte.

Außerdem ist aus der gattungsbildenden DE 93 02 971 ein Fahrzeugrad mit einer Steilschulterfelge und einer daran befestigten Radschüssel bekannt, die so ausgebildet ist, daß sich das Fahrzeugrad bestimmungsgemäß für eine Zwillingsanordnung eignet. Des weiteren hat das vorbekannte Fahrzeugrad ein Luftventil, das ebenfalls entsprechend der Bestimmung des Fahrzeugrads für Nutzfahrzeuge, als Schraubventil ausgebildet ist. Das Ventilloch ist zwischen dem Felgenbett und einem zylindrischen Übergangsteil der Felge angeordnet, an dessen Unterseite der Rand der Radschüssel angeschweißt ist. Infolgedessen liegt das Ventil innerhalb des von der Felge und der Radschüssel begrenzten Raumes, in welchem auch die Scheibenbremse mit ihrem feststehenden Bremssattel angeordnet ist. Das als Einfüllöffnung dienende freie Ende des Ventils ragt in ein Lüftungsloch, das in einem konischen Abschnitt der Seitenwand der Radschüssel angeordnet ist.

Zum Anschluß an einen Druckluftschlauch ist das Ventil somit von der Felgenaußenseite über den zwischen der Felgenschulter und der Seitenwand der Radschüssel gebildeten Raum zugänglich. Die am Anschlußteil des Ventils befindliche Überwurfmutter ist zur Montage und Demontage des Ventils von der Felgeninnenseite über den Raum zugänglich, in welchem die Scheibenbremse angeordnet ist. Zum Schutz des Ventils vor einer Beschädigung und/oder einem Abriß, die bzw. der durch das Einklemmen von Fremdkörpern wie Steine zwischen dem feststehenden Bremssattel und dem mit der Felge rotierenden Ventil verursacht werden kann, ist eine Ventilschutzkappe vorgesehen, die das Ventilrohr auf der radialen Innenseite abdeckt und an der Radschüssel lösbar gehaltert ist, wobei sich die Ventilschutzkappe am Umfangsbereich des Lüftungsloches abstützt.

Der durch die Ventilschutzkappe gebotene Schutz ist unzureichend, denn sie ist selbst der Gefahr einer Beschädigung und/oder eines Abrisses durch eingeklemmte Steine ausgesetzt; dies umso mehr als sich die Ventilschutzkappe noch näher am Bremssattel vorbeibewegt als das eigentliche Ventil. Ist die Ventilschutzkappe einmal beschädigt oder gar abgerissen, können von den rotierenden Teilen mitgerissene Fremdkörper wieder zwischen Ventil und Bremssattel gelangen. Durch den größeren Platzbedarf der Ventilschutzkappe im Vergleich zu dem des Ventils verschärft sich noch das Problem, daß mitgerissene Fremdkörper den Bremssattel beschädigen können.

Durch die Abstützung der Ventilschutzkappe am Umfang des Lüftungsloches ergibt sich das weitere Problem, daß der Querschnitt dieses Lüftungsloches verringert wird, wodurch der Austritt von im Inneren der Felge mitgerissenen Materials durch dieses Lüftungsloch beeinträchtigt oder gar verhindert wird.

Unter Berücksichtigung des vorab geschilderten Standes der Technik stellt sich die Aufgabe, das gattungsgemäße Fahrzeugrad so auszubilden, daß Beschädigungen des Ventils und/oder Bremssattels infolge der Relativdrehung zwischen Ventil und Bremssattel zuverlässig vermieden werden, wobei der für die Bremse vorgesehene Raum möglichst groß ist, das Ventil leicht zugänglich ist und der, auf der Felgenschulter sich abstützende Reifenfuß gegen Abrutschen von der Felgenschulter besser gesichert ist.

Diese Aufgabe wird durch die Kombination der im kennzeichnenden Teil des Anspruchs 1 genannten Merkmale gelöst. Diese Merkmale sind die folgenden:
a) ein Hump ist zwischen der Felgenschulter und dem zylindrischen Übergangsteil vorgesehen,
b) das Ventilloch ist in einer zur Felgeninnenseite hin gerichteten Wand des Humps angeordnet,
c) die Öffnung (Lüftungsloch) ist in Radialrichtung unmittelbar gegenüber dem Anschlußteil des Ventils (32) angeordnet, und
d) das Ventilrohr erstreckt sich in dem Raum zwischen der Felgenschulter und der Seitenwand der Radschüssel, ohne in die Innenseite der Radschüssel (14) hineinzuragen.

Aus der DE 19 41 205 ist zwar ein Fahrzeugrad mit einer Steilschulter-Tiefbettfelge bekannt. Bei diesem Fahrzeugrad ist aber im Unterschied zum erfindungsgemäßen Fahrzeugrad kein zylindrisches Übergangsteil vorhanden, das im Durchmesser größer als das Felgenbett wäre. Das aus der DE 19 41 205 bekannte Fahrzeugrad hat zwar ein Lüftungsloch in der Seitenwand der Radschüssel; dieses Lüftungsloch befindet sich aber nur im konischen Abschnitt der Seitenwand der Radschüssel und liegt nicht in Radialrichtung gegenüber dem Ventilanschluß. Durch diese in Axialrichtung versetzte Anordnung des Lüftungsloches gegenüber dem Ventilanschluß ist der Zugang zu der Überwurfmutter des Ventils durch dieses Lüftungsloch hindurch nicht möglich. Ferner unterscheidet sich das aus der DE 19 41 205 bekannte Fahrzeugrad von dem erfindungsgemäßen Fahrzeugrad dadurch, daß der Durchmesser des für die Bremse vorgesehenen Raums im Bereich der Felgenmitte durch den Durchmesser des zylindrischen Abschnitts der Seitenwand der Radschlüssel bestimmt wird, der kleiner als der Durchmesser des Felgenbetts ist. Schließlich weist das aus der DE 19 41 205 bekannte Fahrzeugrad keinen Hump zwischen Felgenbett und Felgenschulter auf, so daß die Gefahr des Abrutschens des sich auf der Felgenschulter abstützenden Reifenfußes in Richtung Felgenbett erheblich ist.

Mit der Kombination der Merkmale des kennzeichnenden Teils des Anspruchs 1 gemäß der vorliegenden Erfindung werden die folgenden Wirkungen erzielt:
1. Das Ventil liegt vollständig außerhalb des für die Bremse vorgesehenen Raums, so daß die Gefahr der Einklemmung von Fremdkörpern zwischen Ventil und Bremssattel zuverlässig vermieden ist.
2. Das Ventil benötigt keinen zusätzlichen Schutz wie zum Beispiel eine Ventilschutzkappe, weil die unter Punkt 1 genannte Gefahr nicht mehr vorhanden ist.
3. Durch die geänderte Anordnung des Ventils in den außerhalb des für die Bremse vorgesehenen Raumes wird dieser Raum vergrößert, wodurch entweder eine größere Bremse in ihm untergebracht werden kann oder bei unveränderter Größe der Bremse ein größerer Freiraum zwischen den rotierenden Teilen des Fahrzeugrades und den feststehenden Teilen der Bremse geschaffen wird.
4. Der Hump sichert den auf der Felgenschulter sich abstützenden Reifenfuß vor Abrutschen in Richtung Felgenbett, vor allem beim Fahren mit zu niedrigem Reifendruck.
5. Die Überwurfmutter des Ventils ist von der Innenseite durch das Lüftungsloch für einen Gabelschlüssel leicht zugänglich.
6. Das Lüftungsloch ist größer, wobei es sich nicht nur im konischen Abschnitt wie bisher sondern auch im zylindrischen Abschnitt der Seitenwand der Radschlüssel befindet. Infolgedessen ist der Austritt von Fremdkörpern aus dem für die Bremse vorgesehenen Raum nach außen durch dieses Lüftungsloch erleichtert.
7. Durch die Abstufung zwischen dem zylindrischen Übergangsteil und dem Felgenbett in Verbindung mit der Verlagerung des Ventils in den Raum zwischen Seitenwand der Radschüssel und Felgenschulter wird der Durchmesser des für die Bremse vorgesehenen Raums im Bereich des zylindrischen Übergangsteils und des Felgenbetts vom Durchmesser des Felgenbetts bestimmt.
8. Beim Überprüfen des Luftdrucks und gegebenenfalls Nachfüllen von Luft kann das Ventil in einfacher und problemloser Weise mit dem dafür vorgesehenen Druckluftschlauch verbunden werden.

In den Unteransprüchen 2 und 3 sind vorteilhafte Ausführungsformen der Erfindung dargestellt.

Weitere Vorteile ergeben sich aus der Beschreibung und den beigefügten Zeichnungen. Ebenso können die vorstehend genannten und noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Die Erfindung ist in den Zeichnungen dargestellt und wird anhand von einem Ausführungsbeispiel näher erläutert.
- Figur 1: zeigt eine geschnitten dargestellte Ansicht eines erfindungsgemäßen Fahrzeugrads.
- Figur 2: zeigt eine Draufsicht auf ein erfindungsgemäßes Fahrzeugrad.
- Figur 3: zeigt einen Schnitt A-A durch das in Fig. 2 gezeigte Fahrzeugrad.
- Figur 4: zeigt zwei erfindungsgemäße Fahrzeugräder in Zwillingsanordnung.

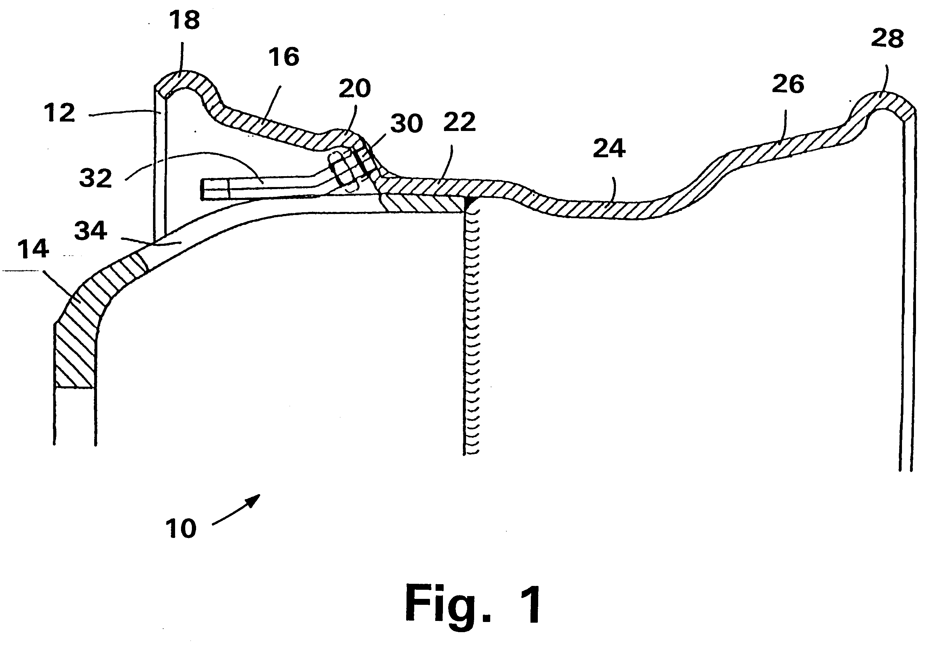

Figur 1 zeigt das erfindungsgemäße Fahrzeugrad im wesentlichen maßstabsgerecht.

Figur 1 zeigt ein aus Stahlblech hergestelltes Fahrzeugrad 10 für Nutzfahrzeuge mit einer Steilschulterfelge 12 und einer daran angeschweißten Schüssel 14. Die auf der Fahrzeugaußenseite der Steilschulterfelge 12 befindliche Felgenschulter 16 wird einerseits durch ein Horn 18 und andererseits durch einen Hump 20 begrenzt und ist um ca. 15° zur Horizontalen geneigt.

An den Hump schließt sich ein umlaufendes, zylindrisches Übergangsteil 22 an, an dem die Schüssel 14 angeschweißt ist. Selbstverständlich kann das zylindrische Übergangsteil leicht konisch, beispielsweise mit einer Verjüngung von einem Grad, ausgebildet sein, um eine bessere Anlage der Radschüssel an dem zylindrischen Übergangsteil zu erreichen.

An das zylindrische Übergangsteil 22 schließt sich ein Felgenbett 24, eine innere Felgenschulter 26 und ein inneres Horn 28 an.

In einer zur Felgeninnenseite hin gerichteten Wand des Humps ist ein Durchgangsloch 30 zur Aufnahme eines Luftventils 32 vorgesehen.

Dieses Luftventil 32 ist so ausgestaltet, daß es in seinem montierten Zustand in einem Zwischenraum zwischen der Außenseite der Schüssel 14 und der Unterseite der Steilschulterfelge 12 angeordnet ist und nicht in die Innenseite der Schüssel hineinragt.

In dem Bereich der Schüssel 14, der dem Luftventil 32 am nächsten ist, ist eine Bedienungsöffnung bzw. ein Lüftungsloch 34 vorgesehen, um den Zugang zum Luftventil und den Anschluß eines Druckluftschlauches zu erleichtern.

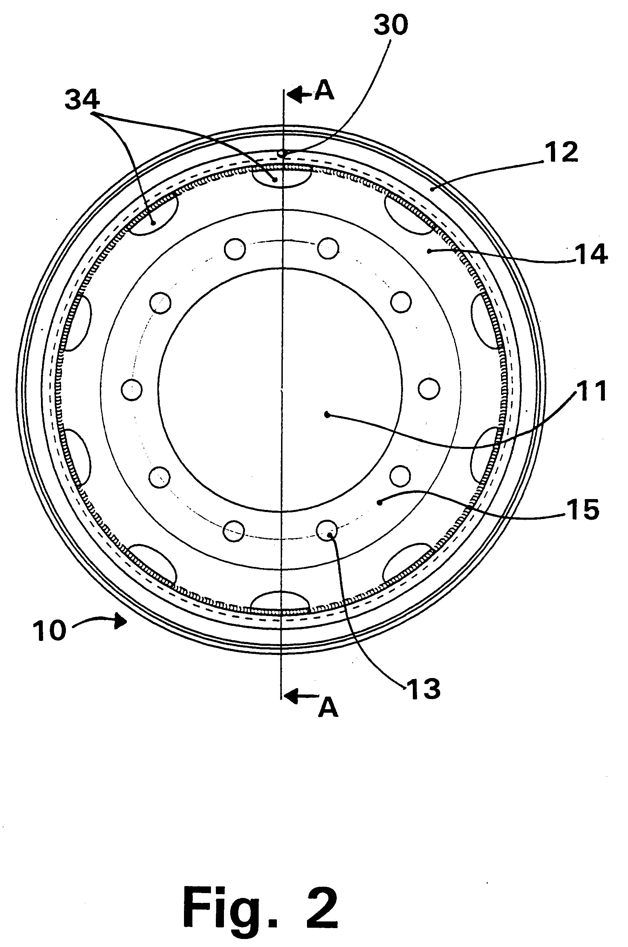

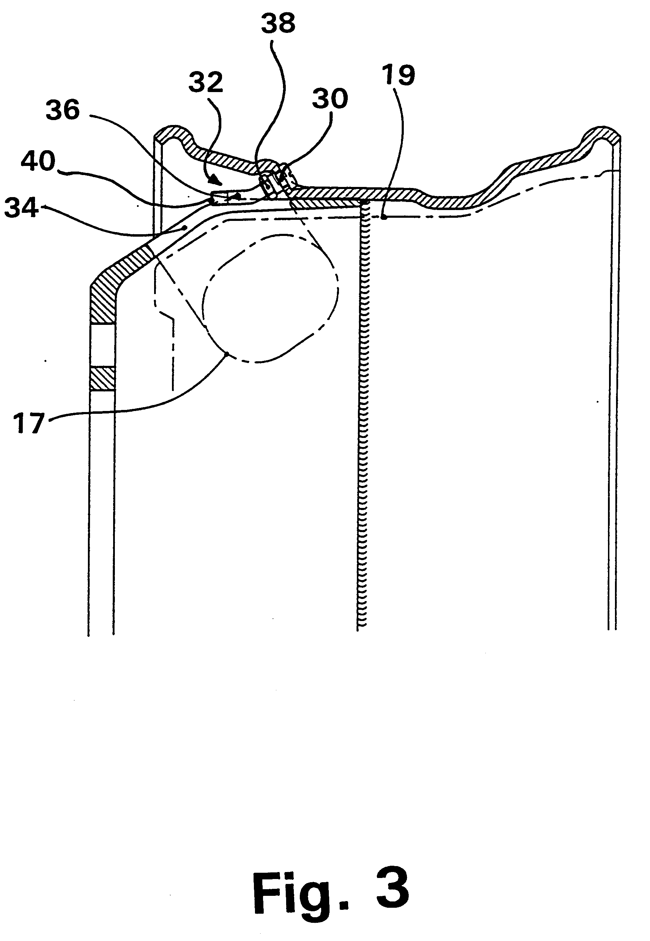

Wie in Figur 2 zu sehen ist, sind auf einem Lochkreis 15 um ein Mittenloch 11 herum mehrere Löcher 13 in der Radschüssel 14 zur Aufnahme von (nicht gezeigten) Radschrauben vorgesehen. Auf einem radial weiter außen liegenden Teilkreisumfang sind mehrere Lüftungslöcher 34 gleichmäßig verteilt angeordnet. Eines der Lüftungslöcher 34 befindet sich im Bereich des Durchgangslochs 30, um den Zugang zu einem (nicht gezeigten) in dem Durchgangsloch 30 angeordneten Luftventil zu ermöglichen, was deutlicher in den Schnittdarstellungen der Figuren 1 und 3 zu erkennen ist.

In der Figur 3 ist, zusätzlich zu der Darstellung in Figur 1, die Kontur 17 des im Bereich des Luftventils 32 angeordneten Lüftungslochs 34 gezeigt. Desweiteren ist die Kontur der Bremse durch die gestrichelte Linie 19 angedeutet. Wie deutlich zu erkennen ist, ist bei der erfindungsgemäßen Ausbildung des in Figur 3 gezeigten Fahrzeugrades deutlich mehr Platz für die Bremse vorhanden als bei herkömmlichen Fahrzeugrädern.

Bei dem Luftventil 32 handelt es sich um ein herkömmliches Luftventil mit einem Ventilrohr 36. Das Luftventil 32 ist durch eine Überwurfmutter 38 in dem Durchgangsloch 30 befestigt. Das Ventilrohr 36 ist leicht abgeknickt, so daß die Ventilöffnung 40 leicht von außen zugänglich ist. Dabei ist sichergestellt, daß das Ventilrohr 36 nicht durch das Lüftungsloch 34 in das Innere der Radschüssel ragt.

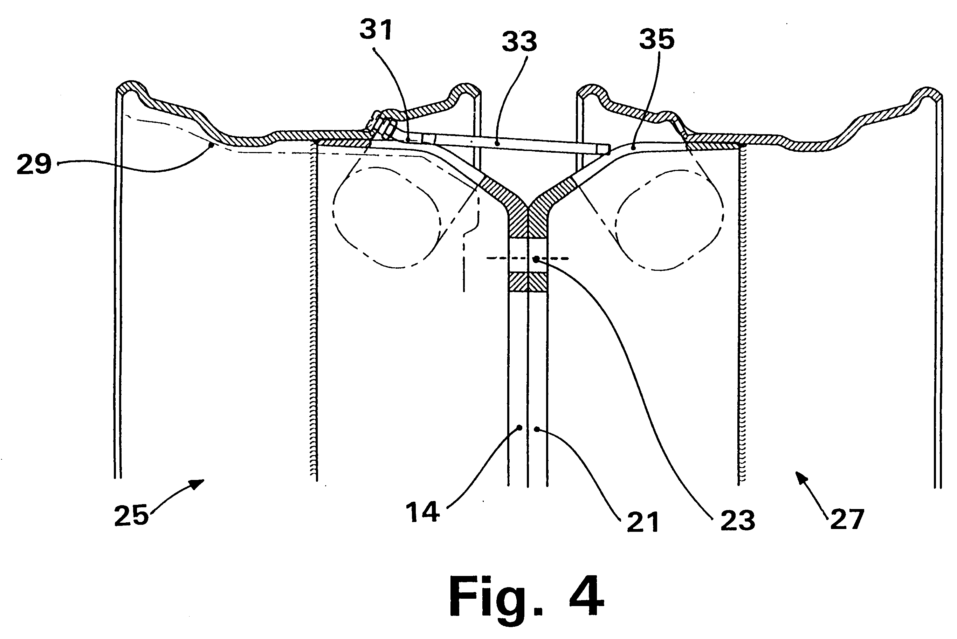

Bei der in Figur 4 gezeigten Zwillingsanordnung sind die Radschüsseln 14 und 21 von zwei erfindungsgemäßen Fahrzeugrädern 25 und 27 durch eine vereinfacht dargestellte Schraubverbindung 23 miteinander verbunden. Im Inneren der Schüssel 14 des Fahrzeugrades 25 ist die Kontur der Bremse durch die gestrichelte Linie 29 angedeutet. Das Lüftungsloch 35 des bezogen auf das (nicht gezeigte) Fahrzeug außen angeordneten Fahrzeugrades 27 ist über den Innenraum der Schüssel 21 von außen (bezogen auf das Fahrzeug) zugänglich. Durch das Lüftungsloch 35 kann somit das (nicht gezeigte) Luftventil des Fahrzeugrades 27 mit Druckkluft befüllt werden. Außerdem kann ebenfalls durch das Lüftungsloch 35, beispielsweise über ein Verlängerungsrohr 33, das Luftventil 31 des zum (nicht gezeigten) Fahrzeug hin angeordneten Fahrzeugrades 25 erreicht werden. Das bedeutet, daß die Luftventile der Fahrzeuugräder 25 und 27 beide über das Lüftungsloch 35 des äußeren Fahrzeugrades 27 mit Druckluft versorgt werden können.

## Patentansprüche

1. Fahrzeugrad für Nutzfahrzeuge, mit einer Steilschulterfelge (12) für schlauchlose Reifen und einer an der Steilschulterfelge (12) angebrachten Radschüssel (14), wobei die Steilschulterfelge (12) ein Felgentiefbett (24), eine äußere Felgenschulter (16), ein zylindrisches Übergangsteil (22), das zwischen dem Felgenbett (24) und der äußeren Felgenschulter (16) angeordnet und im Durchmesser größer als das Felgenbett (24) ist, und ein Ventilloch (30) aufweist, das zwischen dem Felgenbett (24) und der äußeren Felgenschulter (16) angeordnet ist, wobei die Radschüssel (14) eine den Rand der Radschüssel (14) bildende Seitenwand hat, die eine Öffnung (34) aufweist und an einen zwischen sich und der Felgenschulter (16) gebildeten Raum grenzt, und wobei ein Ventil (32) vorgesehen ist, das ein Ventilrohr und ein an einem Ende des Ventilrohres vorgesehenes Anschlußteil aufweist, das am Ventilloch (30) der Felge (12) befestigbar ist,
dadurch gekennzeichnet,
daß ein Hump (20) zwischen der Felgenschulter (16) und dem zylindrischen Übergangsteil (22) vorgesehen ist, das Ventilloch (30) in einer zur Felgeninnenseite hin gerichteten Wand des Humps (20) angeordnet ist, die Öffnung (34) in Radialrichtung unmittelbar gegenüber dem Anschlußteil des Ventils (32) angeordnet ist und sich das Ventilrohr in dem Raum erstreckt, ohne in die Innenseite der Radschüssel (14) hineinzuragen.

2. Fahrzeugrad nach Anspruch 1, dadurch gekennzeichnet, daß die Seitenwand der Radschüssel (14) einen konischen Abschnitt und einen sich daran anschließenden zylindrischen Abschnitt aufweist, der an dem zylindrischen Übergangsteil (22) angeschweißt ist, und sich die Öffnung (34) im konischen Abschnitt und im zylindrischen Abschnitt der Seitenwand der Radschüssel (14) befindet.

3. Fahrzeugrad nach Anspruch 2, dadurch gekennzeichnet, daß sich der zylindrische Abschnitt in Axialrichtung vom zylindrischen Übergangsteil (22) bis zur Felgenschulter (16) erstreckt.

## Claims

1. A wheel for commercial vehicles, comprising a steep rim (12) for tubeless tyres and a wheel disc (14) mounted on the rim (12), the rim (12) comprising a well (24), an outer flange (16), a cylindrical transition section (22) disposed between the well (24) and the outer flange (16) and of a larger diameter than the well (24), and a valve hole (30) disposed between the well (24) and the outer flange (16), the disc (14) having a side wall which forms the edge of the disc (14) and which has an opening (34) and adjoins a space formed between itself and the flange (16), a valve (32) being provided comprising a valve tube and a connecting member which is provided at the end of the valve tube and which is adapted to be secured to the valve hole (30) in the rim (12), characterised in that a hump (20) is provided between the flange (16) and the cylindrical transition section (22), the valve hole (30) is disposed in a wall of the hump (20) extending towards the inside of the rim, the opening (34) is disposed radially directly opposite the connecting member of the valve (32) and the valve tube extends in the space without projecting into the inside of the disc (14).

2. A vehicle wheel according to claim 1, characterised in that the side wall of the disc (14) has a conical portion and an adjoining cylindrical portion welded to the cylindrical transition section (22), and the opening (34) is disposed in the conical portion and in the cylindrical portion of the side wall of the disc (14).

3. A vehicle wheel according to claim 2, characterised in that the cylindrical portion extends axially from the cylindrical transition section (22) as far as the flange (16).

## Revendications

1. Roue pour véhicules utilitaires comportant une jante à épaule raide (12) pour pneus sans chambre et un voile (14) monté sur cette jante à épaule raide (12), la jante à épaule raide (12) présentant une base creuse (24), une épaule extérieure (16), une partie de raccordement cylindrique (22) située entre la base (24) et l'épaule extérieure (16) et de plus grand diamètre que la base (24), et un trou de valve (30) situé entre la base (24) et l'épaule extérieure (16), le voile (14) ayant une paroi latérale formant son bord qui présente une ouverture (34) et est contiguë à un espace formé entre elle et l'épaule (16), et étant prévue une valve (32) qui présente un tuyau et une partie de raccordement prévue à une extrémité de ce tuyau et pouvant être fixée au trou de valve (30) de la jante (12),
caractérisée par le fait
qu'une bosse (20) est prévue entre l'épaule (16) de la jante et la partie de raccordement cylindrique (22), le trou de valve (30) est situé dans une paroi de cette bosse (20) dirigée vers le côté intérieur de la jante, l'ouverture (34) est située, dans la direction radiale, directement en face de la partie de jonction de la valve (32) et le tuyau de la valve s'étend dans l'espace sans entrer dans le côté intérieur du voile (14).

2. Roue selon la revendication 1, caractérisée par le fait que la paroi latérale du voile (14) présente une partie conique et une partie cylindrique se joignant à celle-ci qui est soudée à la partie de raccordement cylindrique (22), et l'ouverture (34) se trouve dans la partie conique et dans la partie cylindrique de la paroi latérale du voile (14).

3. Roue selon la revendication 2, caractérisée par le fait que la partie cylindrique s'étend dans la direction axiale de la partie de raccordement cylindrique (22) jusqu'à l'épaule (16) de la jante.
